Europäisches Patentamt

European Patent Office

Office européen des brevets

(19)

(11) Publication number: **0 153 169**
A2

## (12) EUROPEAN PATENT APPLICATION

(21) Application number: **85301028.8**

(22) Date of filing: **15.02.85**

(51) Int. Cl.⁴: **H 01 L 33/00**, H 01 L 31/02

(30) Priority: **17.02.84 US 581171**
**28.01.85 US 695255**

(43) Date of publication of application: **28.08.85**
**Bulletin 85/35**

(84) Designated Contracting States: **BE CH DE FR GB IT LI
LU NL SE**

(71) Applicant: **STAUFFER CHEMICAL COMPANY, Westport
Connecticut 06881 (US)**

(72) Inventor: **Olego, Diego Jose, 28T Scenic Drive,
Croton-on-Hudson, N.Y. 10520 (US)**

(74) Representative: **Smith, Sydney et al, Elkington and Fife
High Holborn House 52/54 High Holborn, London
WC1V 6SH (GB)**

(54) Use of pnictide films for wave-guiding in opto-electronic devices.

(57) An electro-optical device characterised in that it comprises:
(A) a semiconductor body: and
(B) at least one pnictide-rich layer for guiding light waves in the said body is disclosed.

Referring to the accompanying diagram, an electro-optical device 20 may comprise a semiconductor body 22 and pnictide-rich layers 24 and 26.

The semiconductor layer of an opto-electronic device has one or more films of a pnictide-rich material deposited thereon. The pnictide has a smaller reflective index than the semiconductor layer. These films provide a wave-guiding effect to light within the semiconductor layer in opto-electronic devices, such as solid state lasers and light emitting diodes and waveguides interconnecting such devices.

The invention provides advantages over the prior art.

$N$ AND $N'' < N'$

"Use of pnictide films for wave-guiding in opto-electronic devices"

---

This invention relates to the use of pnictide films for wave-guiding in opto-electronic devices; more particularly, it relates to such and to compound and intermetallic semiconductors; to binary, ternary and quaternary semiconductors; to III-V semiconductors; and to solid state lasers and light emitting diodes.

For further information, reference may be made to, for example, GB-A 2,113,663, EP-A-130803, EP-A- 132 323, EP-A 132 954, EP-A- 132 326 and EP-A- 132 322, also to as yet unpublished European Applications 84 304 407.4, 84 304 411.6, 84 304 412.4, 84 304 413.2 and 84 304 414.0 and USSN 619,053, as well as to the related application filed herewith based on USSN 581,140 and USSN 695,268.

Various compound and intermetallic semiconductors containing a pnictide are currently utilized in opto-electronic devices, such as solid state lasers and light emitting diodes. In order to provide light guiding in and to and from these devices films are applied thereto having a lower index of refraction than the light containing semiconductor material. However, the native oxides of the semiconductor materials are not good film-formers thereon and do not provide good adherence or good interface properties. In accordance with EP-A-132326, for example, pnictide-rich thin films may be grown with good adherence and interface properties on semiconductors comprising a pnictide.

It is therefore an object of the present invention to provide wave-guiding in opto-electronic devices.

Another object of the present invention is to provide wave-guiding in opto-electronic devices comprising pnictides.

Still another object of the present invention is to provide for wave-guiding in opto-electronic duivces comprising binary, ternary and quaternary semiconductors.

A further object of the present invention is to provide for wave-guiding in such opto-electronic devices as solid state lasers and light emitting diodes and wave guides to and from such devices.

The present invention relates to:
An electro-optical device characterised in that it comprises:

(A)  a semiconductor body; and

(B)  at least one pnictide-rich layer for guiding light waves in the said body.

In preferred embodiments, (A) may comprise a compound semiconductor or an intermetallic semiconductor or a III-V semiconductor or a binary semiconductor or a ternary semiconductor or a quaternary semiconductor.

(A) preferably comprises a pnictide.

(B) may comprise a polypnictide, in particular $MP_x$ wherein M represents an alkali metal, P represents a pnictide and x ranges from 15 to infinity.

It is preferred that (B) comprise phosphorus, for example mPx wherein P represents phosphorus.

(B) may be monoclinic, substantially pure phosphorus, red phosphorus, phosphorus having a layer-like local order or amorphous.

It is important that (B) has a smaller refractive index than (A).

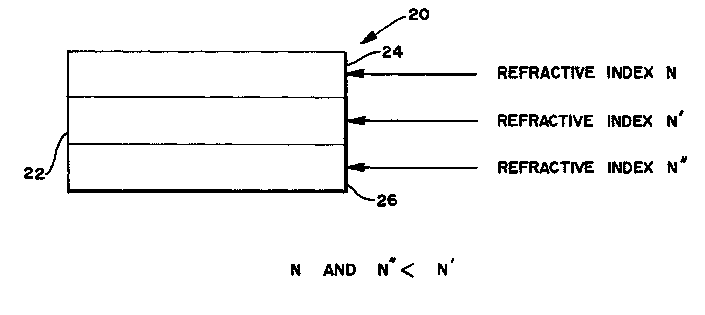

The present invention will now be illustrated with particular reference to the accompanying drawing which is a diagrammatic cross-sectional view of an opto-electronic device according to the present invention.

An electro-optical device, generally indicated at 20, according to the present invention, comprises a semiconductor body 22 of a compound or intermetallic semiconductor. For example, the pnictide containing binary, ternary and quaternary semiconductors currently utilized in opto-electronic devices, such as solid state lasers and light emitting diodes. One or more thin pnictide rich layers 24 and 26 are deposited on the body 22. The refractive index of film 24, $N$, and the refractive index of the layer 26, $N''$, are both smaller than the refractive index of the semiconductor body 22, $N'$. The device 20 may be an active light emitting or light collecting device or it may be a wave-guide leading to or from such devices; that is, the semiconductor body 22 may or may not be active electrically.

Since various elemental pnictides and high pnictide polypnictides have been found to be good film-formers having good adherence and interface properties to opto-electronic semiconductor materials and since some of these have lower indices of refraction than the semiconductors, the wave-guiding contemplated by the present invention may be achieved by the construction illustrated in the accompanying Figure.

-4-

The semiconductor body 22 preferably comprises a pnictide so that the pnictide-rich layers 24 and 26 obtain some atomic matching with the surface pnictide atoms of the semiconductor body 22.

In particular, the semiconductor body 22 may comprise III-V materials, such as GaAs, InP and GaP, and the pnictide-rich layer may comprise phosphorus, for example, monoclinic phosphorus or red phosphorus, or the new form of amorphous phosphorus having a layer-like, puckered, sheet-like local order disclosed in EP-A- 132 326, for example, other elemental pnictides, or a high-pnictide polypnictide such as $MP_x$ wherein M represents an alkali metal, P represents a pnictide and x ranges from 15 to infinity. Polyphosphides are the preferred polypnictides, particularly potassium polyphosphides.

The semiconductors according to the present invention comprising pnictides are commonly called intermetallic or compound. III-V semiconductors which are compound, intermetallic, semiconductors comprise elements from group III and group V of the Periodic Table, such as, gallium phosphide, gallium arsenide, gallium antimonide, indium phosphide, indium arsenide and indium antimonide, and similar ternary and quaternary semiconductors. By pnictide is meant those elements from group V of the Periodic Table, namely nitrogen, phosphorus, arsenic, antimony and bismuth.

Claims:

1. An electro-optical device (20) characterised in that it comprises:

    (A) a semiconductor body (22): and

    (B) at least one pnictide-rich layer (24, 26) for guiding light waves in the said body.

2. A device as claimed in claim 1 wherein (A) comprises a compound semiconductor or an intermetallic semiconductor or a III-V semiconductor or a binary semiconductor or a ternary semiconductor or a quaternary semiconductor.

3. A device as claimed in claim 1 or claim 2 wherein (A) comprises a pnictide.

4. A device as claimed in any of claims 1 to 3 wherein (B) comprises phosphorus.

5. A device as claimed in claim 4 wherein (B) comprises $MP_x$ wherein M represents an alkali metal, P represents phosphorus and x ranges from 15 to infinity.

6. A device as claimed in claim 4 wherein (B) is monoclinic or is substantially pure phosphorus or is red phosphorus or comprises phosphorus having a layer-like local order or is amorphous.

7. A device as claimed in any of claims 1 to 3 wherein (B) comprises a polypnictide.

8. A device as claimed in claim 7 wherein (B) comprises $MP_x$ wherein M represents an alkali metal, P represents a a pnictide and x ranges from 15 to infinity.

9. A device as claimed in any of claims 1 to 8 wherein (B) has a smaller refractive index than (A).

REFRACTIVE INDEX N

REFRACTIVE INDEX N'

REFRACTIVE INDEX N"

N AND N" < N'